# EUROPEAN PATENT APPLICATION

(11) **EP 2 924 619 A1**
(43) Date of publication of application: **30.09.2015**
(21) Application number: 15157327.6
(22) Date of filing: 03.03.2015
(51) Int. Cl.: G06K 19/077

(54) **Electronic information label, server, and method of transmitting call signal**

(30) Priority: 28.03.2014 KR 20140037254; 08.04.2014 KR 20140041955; 23.07.2014 KR 20140093583
(71) Applicant: Samsung Electro-Mechanics Co., Ltd., Gyeonggi-do (KR)
(72) Inventor: Kim, Eun Sun, Gyeonggi-do (KR); Yoon, Dong Sik, Gyeonggi-do (KR); Ryu, Jong Gi, Gyeonggi-do (KR); Seo, Dae Yeol, Gyeonggi-do (KR); Lee, Tae Ha, Gyeonggi-do (KR); Hwang, Ki Han, Gyeonggi-do (KR)
(74) Representative: Grünecker Patent- und Rechtsanwälte PartG mbB

(57) **Abstract**

An Electronic Information Label (EIL), a server, and a method of transmitting a call signal are provided. According to an exemplary embodiment, an EIL includes: a receiver configured to receive manipulation from a user; a detector configured to cause an interrupt signal by detecting the manipulation received in the receiver; and a call request transmitter configured to wake up in response to detection of the interrupt signal, and transmit a call request signal to a management server to request a call for a person in charge.

## Description

### CROSS-REFERENCE TO RELATED APPLICATION(S)

This application claims priority from Korean Patent Application Nos. 10-2014-0037254, filed on March 28, 2014, 10-2014-0041955, filed on April 8, 2014, and 10-2014-0093583, filed on July 23, 2014, in the Korean Intellectual Property Office, the entire disclosures of which are incorporated herein by reference for all purposes.

### BACKGROUND

### 1. Field

The following description relates to an Electronic Information Label (EIL) and an electronic label system.

### 2. Description of the Related Art

An Electronic Information Label (EIL) system used in retail stores can prevent errors that may be made by a manager or may occur when printing a paper price tag, so that customers may trust the price of merchandise in the store more.

A central server of the EIL system can control and manage all information on products in the store. However, limited information can be displayed on an EIL, and customers have to ask a staff member to obtain additional information about a product.

There are not enough staff members deployed at store floor, so customers have to look for a staff member when need arises. In addition, in a case where each staff member manages a different product category, a customer has to find out the right person in charge.

### SUMMARY

The following description relates to an Electronic Information Label (EIL), a server, and a method of transmitting a call signal, whereby a user is enabled to call a staff member easily and quickly using an EIL.

In one general aspect, there is provided an Electronic Information Label (EIL) including: a receiver configured to receive manipulation from a user; a detector configured to cause an interrupt signal by detecting the manipulation received in the receiver; and a call request transmitter configured to wake up in response to detection of the interrupt signal, and transmit a call request signal to a management server to request a call for a person in charge.

The receiver may be further configured to comprise a call button to receive the manipulation of the user.

The call button may be arranged on a front or side of the EIL.

The call button may be a touch screen that is included in a display of the EIL.

The call request transmitter may be further configured to include: a call request signal generator configured to generate a call request signal by detecting the interrupt signal; and
a wireless communicator configured to transmit the call request signal to the management server.

The call request signal may include identification information of the EIL.

The identification information may be an MAC address of the EIL.

In another general aspect, there is provided a method of transmitting a call signal using an Electronic Information Label (EIL) having a call button, the method including: detecting manipulation of the call button; in response to detection of the manipulation, shifting an operational mode to a wake-up mode; and transmitting a call request signal to a management server to request a call for a person in charge.

The call request signal may include identification information of the EIL.

The identification information may be an MAC address of the EIL.

In still another general aspect, there is provided a server including: a call request receiver configured to receive a call request signal from an Electronic Information Label (EIL); a storage configured to store product information and person-in-charge information, both of which correspond to each of a plurality of EILs arranged in a store; an identifier configured to identify the EIL which has transmitted the call request signal, and identify product information and person-in-charge information, both of which corresponds to the identified EIL from among the whole product information and person-in-charge information stored in the storage; and a call signal transmitter configured to transmit a call signal to a mobile terminal of a person in charge based on the identified person-in-charge information.

The call request signal may include identification information of the EIL which has transmitted the call request signal, and the identifier may be further configured to, based on the identification information, identify the EIL which has transmitted the call request signal.

The identification information may be an MAC address of the EIL.

The call request signal may include the identified product information.

The product information may include one or more of a name, a number of inventories, and a display location of a product corresponding to the identified EIL.

In yet another general aspect, there is provided a method of transmitting a call signal, including: receiving a call request signal from an Electronic Information Label (EIL); identifying the EIL which has transmitted the call request signal; identifying product information and person-in-charge, both of which correspond to the identified EIL; and transmitting a call signal to a mobile terminal of a person in charge based on the identified person-in-charge information.

The call request signal may include identification information of the EIL, and the identifying of the EIL may include, based on the identification information, identifying the EIL which has transmitted the call request signal.

The identification information may be an MAC address of the EIL.

The call signal may include the identified product information.

The product information may include one or more of a name, a number of inventories, and a display location of a product corresponding to the identified EIL.

Other features and aspects may be apparent from the following detailed description, the drawings, and the claims.

### BRIEF DESCRIPTION OF THE DRAWINGS

FIG. 1 is a diagram illustrating an Electronic Information Label (EIL) system according to an exemplary embodiment.
FIG. 2 is a diagram illustrating an EIL according to an exemplary embodiment.
FIG. 3 is a diagram illustrating a call request transmitter according to an exemplary embodiment.
FIG. 4 is a diagram illustrating a management server according to an exemplary embodiment.
FIGS. 5 and 6 are exemplary embodiments of a call button according to an exemplary embodiment.
FIG. 7 is a flowchart illustrating a method of transmitting a call signal in an EIL system according to an exemplary embodiment.
FIG. 8 is a flowchart illustrating a method of transmitting a call request signal in an EIL according to an exemplary embodiment.
FIG. 9 is a flowchart illustrating a method of transmitting a call signal in a management server according to an exemplary embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

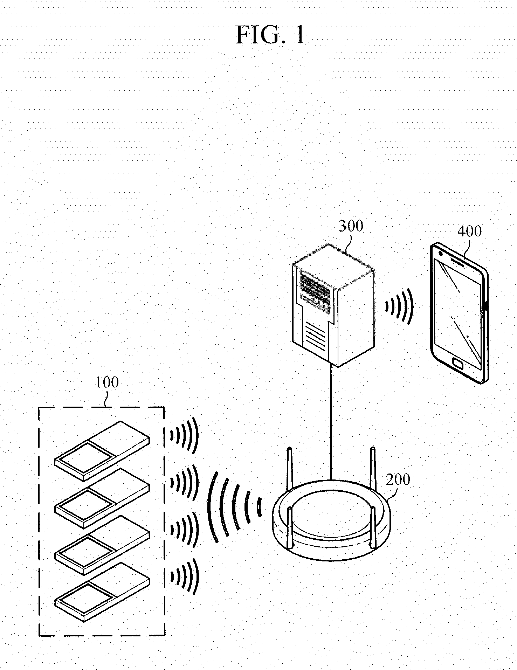

FIG. 1 is a diagram illustrating an Electronic Information Label (EIL) according to an exemplary embodiment.

Referring to FIG. 1, an electronic information label system includes an Electronic Information Label (EIL) 100, a gateway 200, and a management server 300.

The EIL 100 displays information on products on store shelves using an electronic display, such as Liquid Crystal Display (LCD) and e-paper. Specifically, the EIL 100 may receive display information from the management server 300 through a gateway 200, and display the received display information on a display. The display information may include, for example, a product name, a manufacturer, a manufactured date, an expiration date, price information, and the like.

The EIL 100 operates either in a sleep mode or in a wake-up mode to minimize power consumption. Specifically, the EIL 100 waits in a sleep mode for most of time, and shifts to a wake-up mode at predetermined wake-up intervals so as to receive product information from the management server 300 and update information displayed on a display.

According to an exemplary embodiment, the EIL 100 may include a call button, and, if a customer or a staff member in the store manipulates the call button, the EIL 100 shifts to a wake-up mode to transmit a call request signal to the management server 300.

The gateway 200 relays data transmission between the EIL 100 and the management server 300. Specifically, the gateway 200 may communicate with the management server 300 using a wired communication network, such as, for example, Ethernet.

In addition, the gateway 200 may communicate with at least one EIL 100 using a short-range communication technique, such as Zigbee, Bluetooth, or Bluetooth Low Energy (LE).

Although the electronic label system shown in FIG. 1 includes a single gateway 200, the number of gateways 200 is not limited to the embodiment of FIG. 1. That is, the electronic label system may include one or more gateways 200 according to a wireless environment in a store.

The management server 300 may be a database server that stores and manages product information of products on store shelves and person-in-charge information which indicates a staff member in charge of each product. The management server 300 may enable updating information displayed on a display of the corresponding EIL, by generating display information of each EIL 100 arranged in the store and transmitting the display information to a corresponding EIL 100 through the gateway 200.

According to an exemplary embodiment, the management server 300 may store product information and person-in-charge information by matching the same with each EIL 100 arranged in the store. For example, the management server 300 may store and manage identification information of each EIL 100 arranged in the store, and store identification information of an EIL 100 which displays information on a specific product on a display thereof by matching the identification information of the EIL 100 with product information and person-in-charge information of the specific product.

According to an exemplary embodiment, the management server 300 may communicate with a mobile terminal 400 of a person in charge using wireless communication, and, in response to a call request signal from an EIL 100, transmit a call signal to the mobile terminal 400. Various wireless communication techniques, for example, WiFi, Bluetooth, and Zigbee, may be used as the wireless communication between the management server 300 and the mobile terminal 400.

The mobile terminal 400 may include various types of wireless communication devices that a person in charge is able to carry out inside the store. The mobile terminal 400 may include, for example, Personal Digital Assistant (PDA), a smart phone, a tablet PC, and the like.

According to an exemplary embodiment, in response to a call signal from the management server 300, the mobile terminal 400 display, for example, a a pop-up message and the like to notify receipt of the call signal, thereby enabling a person in change to respond to the call signal immediately.

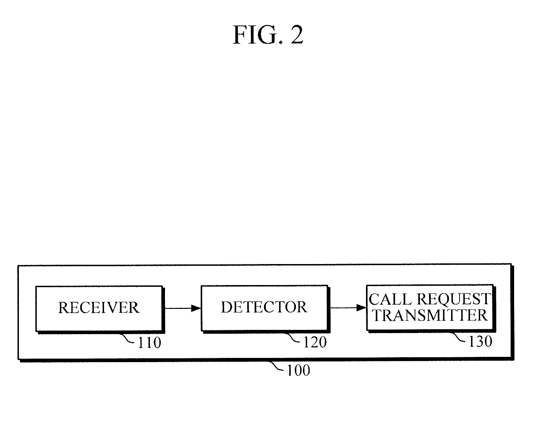

FIG. 2 is a diagram illustrating an Electronic Information Label (EIL) according to an exemplary embodiment.

Referring to FIG. 2, the EIL 100 includes a receiver 110, a detector 120, and a call request transmitter 130.

The receiver 310 is configured to receive a user's manipulation aiming to call a person in charge, and includes a call button that may be manipulated by the user.

For example, when wanting to call a person in charge, a customer or a staff member in the store may manipulate a call button included in the EIL 100.

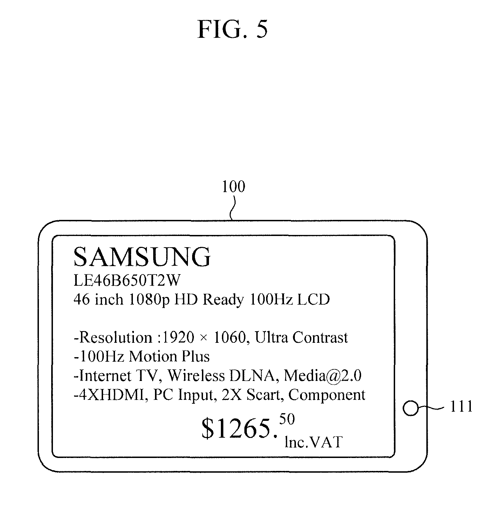

According to an exemplary embodiment, a call button may be arranged on the front or side of the EIL 100. Specifically, a call button may be arranged on a front side of the EIL 100, as shown in FIG. 5. By pressing the call button 111 arranged on the EIL 100, a user may enable transmitting a call request signal to the management server 100 so as to call a person in charge. Meanwhile, arrangement of the call button is not limited to the embodiment of FIG. 5, and the call button may be selectively arranged at various locations.

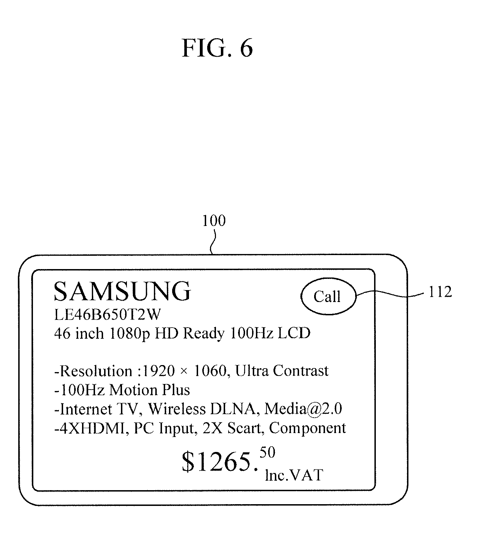

According to another exemplary embodiment, a call button may be a touch screen that is included in a display of the EIL 100. Specifically, a call button may be displayed on a touch screen, as shown in the embodiment of FIG. 6. The touch screen may be in various forms, such as a capacitive overlay touch screen and a resistive touch screen. In this case, by pressing a call button 111 displayed on a touch screen, a user may enable transmitting a call request signal. However, where the call button is placed in FIG. 6 is merely exemplary, and the call button may be selectively placed at various locations on a display.

The detector 120 detects manipulation of a call button and generates an interrupt signal to wake up the call request transmitter 130. For example, in a case where the call button 111 is placed on the front or side of the EIL 110, the detector 120 may be configured as a switch circuit connected to the call button 111. In this case, when a user presses the call button 111, the detector 120 causes the switch to close to apply constant voltage to the call request transmitter 130, thereby causing an interrupt signal to occur.

In another example, in a case where a call button is a touch screen, as shown in FIG. 6, when detecting a touch on a location where the call button 112 is displayed on the touch screen, the detector 120 generates constant voltage and applies the constant voltage to the call request transmitter 130, thereby causing an interrupt signal to occur.

According to whether the receiver 110 receives an input of a user's manipulation, the call request transmitter 130 transmits a call request signal to the management server 300. Specifically, the call request transmitter 130 may operate either in a sleep mode or in a wake-up mode at predetermined wake-up intervals, and, in response to detection an interrupt signal that occurs by the detector 120, immediately shift to a wake-up mode to transmit a call request signal to the management server.

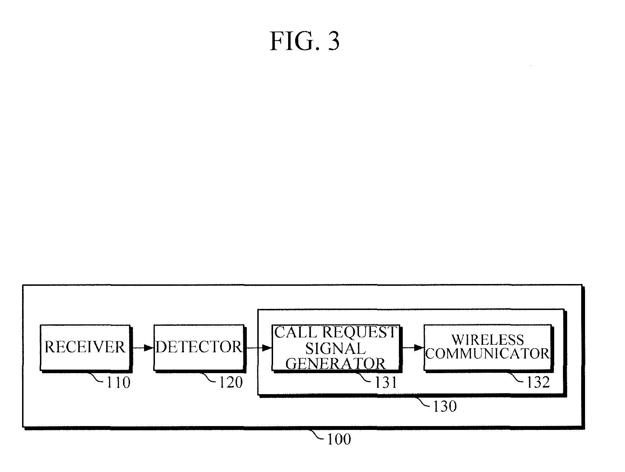

FIG. 3 is a diagram illustrating a call request transmitter according to an exemplary embodiment.

Referring to FIG. 3, the call request transmitter 130 includes a call request signal generator 131 and a wireless communicator 132. The receiver 110 and the detector in FIG. 3 has the same configurations as those illustrated in FIG. 2, and thus, detailed descriptions thereof are herein omitted.

The call request signal generator 131 may generate a call request signal by detecting an interrupt signal occurring in the detector 120. The call request signal aims to call a person in charge who is related to the EIL 100, and may include identification information of the EIL 100 according to an exemplary embodiment. For example, identification information of the EIL 100 may be an MAC address thereof.

The wireless communicator 132 may perform data communications with the gateway 200 using short-range wireless communication, such as, for example, Zigbee, Bluetooth, Bluetooth LE, infrared-ray communication, and the like. According to an exemplary embodiment, when a call request signal is generated in the call request signal generator 131, the wireless communicator 132 transmits the call request signal to the management server 300 through the gateway 200.

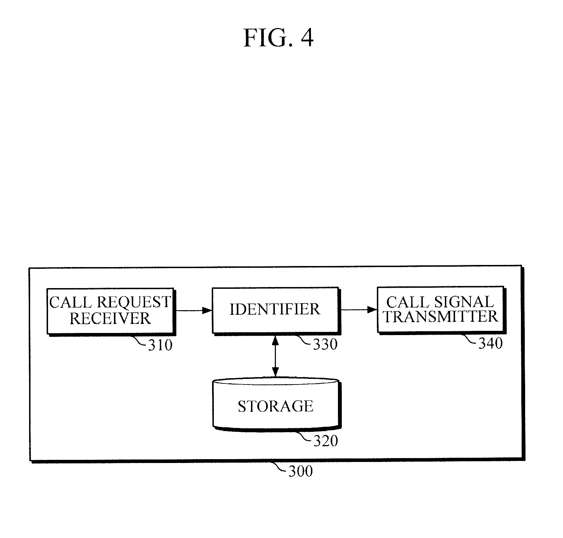

FIG. 4 is a diagram illustrating a management server according to an exemplary embodiment.

Referring to FIG. 4, the management server 300 includes a call request receiver 310, a storage 320, an identifier 330, and a call signal transmitter 340.

The call request receiver 310 receives a call request signal from the EIL 100 through the gateway 200. According to an exemplary embodiment, the call request signal may include identification information of the EIL 100. For example, identification information of the EIL 100, which is included in the call request signal, may be an MAC address of the EIL 100.

The storage 320 may store product information and person-in-charge information, both of which correspond to an EIL arranged in the store.

The product information may include, for example, a display location, a name, a price, a manufacturer, information on promotion sale, information on discount sale, the number of inventories, and the like.

In addition, the person-in-charge information may include, for example, name, contact number, and information about a mobile terminal 400 of a person in charge of each product.

According to an exemplary embodiment, the storage 320 may store product information and person-in-charge information by matching the same with identification information on each of a plurality of EILs 100. For example, in a case where information displayed on a display of a specific EIL 100 is information on a specific product, the storage 320 may store the specific product's product information and person-in-charge information by matching the same with identification information of the specific EIL 100.

The storage 320 may include various storage medium, for example, a flash memory type, a hard disk type, a multimedia card micro type, a card-type memory (e.g., an SD or XD memory), Random Access Memory (RAM), Static Random Access Memory (SRAM), Ready-Only Memory (ROM), Electrically Erasable Programmable Read-Only Memory (EEPROM), Programmable Read-Only Memory (PROM), a magnetic memory, a magnetic disc, an optical disc, and the like.

In response to a call request signal from the EIL 100, the identifier 330 identifies the EIL 100 which has transmitted the call request signal, and identifies product information and person-in-charge information, both of which correspond to the identified EIL 100.

Specifically, the call request signal received from the EIL 100 may include identification information of the EIL 100, and the identifier 330 may identify the EIL 100 by comparing identification information included in the call request signal with all the electronic labels' identification information stored in the storage 320.

In addition, the identifier 330 may identify product information and person-in-charge information, both of which correspond to the identified EIL 100 among the entire product information and person-in-charge information stored in the storage 320. That is, as described above, the storage 320 may store product information and person-in-charge information by matching the same with identification information of each EIL 100 arranged in the store, and identifies product information and person-in-charge information of an EIL 100 which has transmitted a call request signal, by using identification information of the EIL 100.

The call signal transmitter 340 transmits a call signal to a mobile terminal 400 of a person in charge based on person-in-charge information identified by the identifier 330. According to an exemplary embodiment, the call signal may include product information identified by the identifier 330. For example, product information transmitted to the mobile terminal 400 may include one or more of the number of inventories, name, and a display location of a product. At this point, the display location of a product may be a location of an EIL that has transmitted the call request signal.

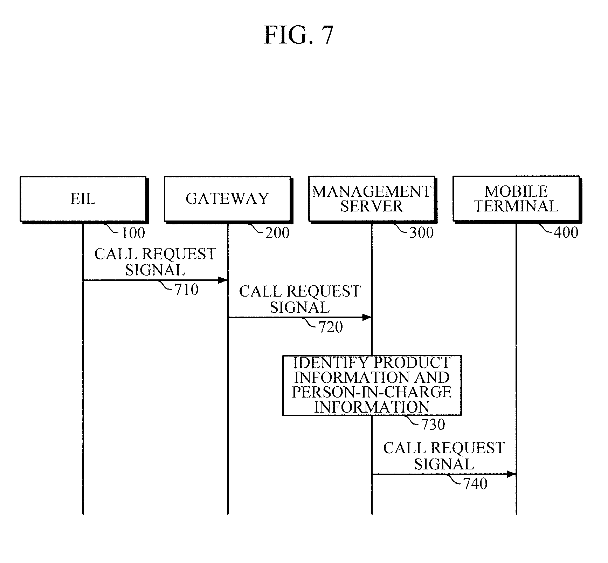

FIG. 7 is a flowchart illustrating a method of transmitting a call signal in an electronic information label system according to an exemplary embodiment.

Referring to FIG. 7, in response to detection of manipulation of a call button, an EIL 100 transmits a call request signal to the gateway 200 in 710.

In response to receipt of the call request signal from the EIL 100, the gateway 200 transmits the received call request signal to the management server 300 in 720.

In response to receipt of the call request signal through the gateway 200, the management server identifies the EIL 100 that has transmitted the call request signal, and identifies product information and person-in-charge information, both of which correspond to the identified EIL 100, in 730.

Then, the management server 300 transmits a call signal to a mobile terminal of a person in charge based on the identified person-in-charge information in 740.

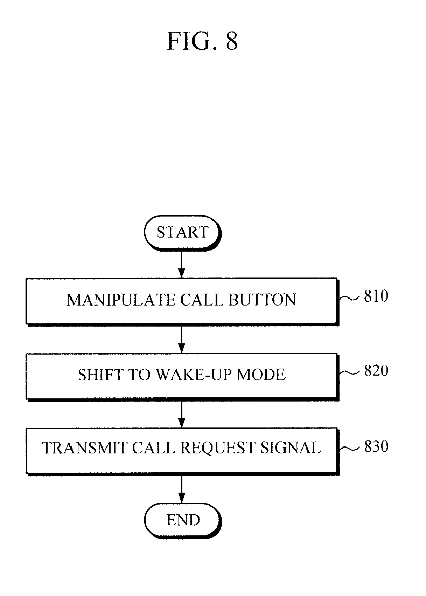

FIG. 8 is a flowchart illustrating a method of transmitting a call request signal of an EIL according to an exemplary embodiment.

Referring to FIG. 8, when detecting manipulation of a call button in 810, an EIL 100 shifts an operational mode to a wake-up mode in 820.

Then, the EIL 100 100 transmits a call request signal to the gateway 200 in 830. According to an exemplary embodiment, the call request signal may include identification information of the EIL 100, and the identification information may be an MAC address of the EIL 100.

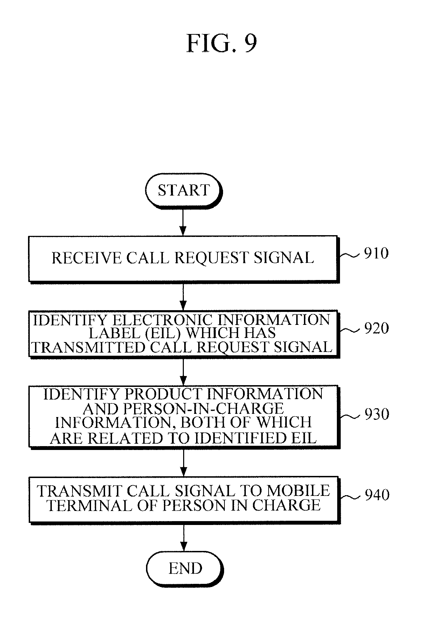

FIG. 9 is a flowchart illustrating a method of transmitting a call signal in a management server according to an exemplary embodiment.

Referring to FIG. 9, the management server 300 receives a call request signal from an EIL 100 through the gateway 200. According to an exemplary embodiment, the call request signal may include identification information of the EIL 100, and the identification information may be, for example, an MAC address of the EIL 100.

In response to receipt of the call request signal, the management server 300 identifies the EIL which has transmitted the call request signal in 9230. For example, the management server 300 may identify the EIL, 100, by comparing identification information included in the call request signal with all the EILs' identification information stored in the management server 300.

After identifying the EIL 100 which has transmitted the call request signal, the management server 300 identifies product information and person-in-charge information, both of which correspond to the identified EIL 100, in 930. For example, the management server 300 may store product information and person-in-charge information, by matching the same with each EIL 100 arranged in the store, and identify product information and person-in-charge information of the EIL 100 which has transmitted the call request signal, by using identification information of the EIL 100.

Then, the management server 300 transmits a call signal to a mobile terminal of a person in charge based on the identified person-in-charge information in 940. According to an exemplary embodiment, the call signal may include identified product information. The product information may include one or more of the number of inventories, name, and a display location. In addition, the display location may be a location of the EIL 100 which has transmitted the call request signal.

The present disclosure enables customers to call a staff member conveniently and quickly when having a question about a product, thereby improving customer satisfaction. In addition, the present disclosure allows customers to let a staff member know that no product is left on a shelf, so that it may improve efficiency of product management.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices.

Also, functional programs, codes, and code segments for accomplishing the present invention can be easily construed by programmers skilled in the art to which the present invention pertains.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An Electronic Information Label (EIL) comprising:
a receiver configured to receive manipulation from a user;
a detector configured to cause an interrupt signal by detecting the manipulation received in the receiver; and
a call request transmitter configured to wake up in response to detection of the interrupt signal, and transmit a call request signal to a management server to request a call for a person in charge.

2. The EIL of claim 1, wherein the receiver is further configured to comprise a call button to receive the manipulation of the user.

3. The EIL of claim 2, wherein the call button is arranged on a front or side of the EIL.

4. The EIL of claim 2, wherein the call button is a touch screen that is included in a display of the EIL.

5. The EIL of claim 1, wherein the call request transmitter is further configured to comprise:
a call request signal generator configured to generate a call request signal by detecting the interrupt signal; and
a wireless communicator configured to transmit the call request signal to the management server.

6. The EIL of claim 1, wherein the call request signal comprises identification information of the EIL.

7. A method of transmitting a call signal using an Electronic Information Label (EIL) having a call button, the method comprising:
detecting manipulation of the call button;
in response to detection of the manipulation, shifting an operational mode to a wake-up mode; and
transmitting a call request signal to a management server to request a call for a person in charge.

8. The method of claim 7, wherein the call request signal comprises identification information of the EIL.

9. A server comprising:
a call request receiver configured to receive a call request signal from an Electronic Information Label (EIL);
a storage configured to store product information and person-in-charge information, both of which correspond to each of a plurality of EILs arranged in a store;
an identifier configured to identify the EIL which has transmitted the call request signal, and identify product information and person-in-charge information, both of which corresponds to the identified EIL from among the whole product information and person-in-charge information stored in the storage; and
a call signal transmitter configured to transmit a call signal to a mobile terminal of a person in charge based on the identified person-in-charge information.

10. The server of claim 9, wherein:
the call request signal comprises identification information of the EIL which has transmitted the call request signal, and
the identifier is further configured to, based on the identification information, identify the EIL which has transmitted the call request signal.

11. The server of claim 9, wherein the call request signal comprises the identified product information.

12. The server of claim 11, wherein the product information comprises one or more of a name, a number of inventories, and a display location of a product corresponding to the identified EIL.

13. A method of transmitting a call signal, comprising:
receiving a call request signal from an Electronic Information Label (EIL);
identifying the EIL which has transmitted the call request signal;
identifying product information and person-in-charge, both of which correspond to the identified EIL; and
transmitting a call signal to a mobile terminal of a person in charge based on the identified person-in-charge information.

14. The method of claim 13, wherein:
the call request signal comprises identification information of the EIL, and
the identifying of the EIL comprises, based on the identification information, identifying the EIL which has transmitted the call request signal.

15. The method of claim 13, wherein the call signal comprises the identified product information.
